# FASCICULE DE BREVET EUROPEEN

(11) **EP 1 738 079 B1**
(45) Date de publication et mention de la délivrance du brevet: **14.05.2008**
(21) Numéro de dépôt: 05744236.0
(22) Date de dépôt: 25.03.2005
(51) Int. Cl.: F04D 25/08, B60K 11/04, H02K 11/04

(54) **GROUPE MOTO-VENTILATEUR POUR VEHICULES AUTOMOBILES**
MOTORGETRIEBENES GEBLÄSE FÜR KRAFTFAHRZEUGE
MOTOR-DRIVEN FAN FOR MOTOR VEHICLES

(30) Priorité: 05.04.2004 FR 0403554
(43) Date de publication de la demande: 03.01.2007
(73) Titulaire: Peugeot Citroen Automobiles SA, 78140 Vélizy-Villacoublay (FR)
(72) Inventeur: MENARD, David, F-78990 Elancourt (FR)
(74) Mandataire: Lanceplaine, Jean-Claude
(86) Numéro de dépôt international: PCT/FR2005/000736
(87) Numéro de publication internationale: WO 2005/100797

(56) Documents cités:
- DE-A- 4 418 000
- DE-C- 19 949 322
- FR-A- 2 742 813
- FR-A- 2 766 302
- US-A- 5 585 681
- US-B1- 6 364 004

## Description

La présente invention concerne un groupe moto-ventilateur pour véhicules automobiles.

De manière classique, les véhicules automobiles comportent un bloc façade de refroidissement comprenant, entre autres, un radiateur de refroidissement du moteur thermique du véhicule automobile, un échangeur supplémentaire tel qu'un condenseur faisant partie du circuit de climatisation de l'habitacle de ce véhicule et éventuellement un refroidisseur de l'air de suralimentation. Ce type de bloc façade com prend également un groupe moto-ventilateur forçant l'air frais à traverser cet ensemble d'échangeurs afin de les refroidir. Semblables groupes moto-ventilateurs sont aussi connus de DE 19 949 322 C, US 6 364 004 B1, FR 2 766 302 A.

A cet effet, le groupe moto-ventilateur comprend une hélice munie de pales sensiblement radiales qui, selon une architecture généralement utilisée, est montée sur un cadre appliqué sur la face arrière du radiateur de refroidissement par rapport à la direction longitudinale du véhicule de façon à aspirer l'air au travers de l'ensemble d'échangeurs constituant le bloc de refroidissement du véhicule automobile.

De ce fait, l'air récupéré par le groupe moto-ventilateur est un air chaud puisqu'il a traversé les différents échangeurs de chaleur composant le bloc de refroidissement avant du véhicule automobile.

Par ailleurs, les véhicules automobiles sont maintenant équipés d'au moins un boîtier électronique, appelé "boîte froide", logé au-dessous du capot moteur et dans lequel sont concentrés divers calculateurs et moyens de pilotage électronique du véhicule automobile.

Compte tenu de l'implantation de ce boîtier électronique au-dessous du capot moteur, le refroidissement de ce boîtier est indispensable pour obtenir un bon fonctionnement des différents éléments le composant. Or, l'air chaud provenant du groupe moto-ventilateur ne peut être utilisé pour le refroidissement de ce boîtier électronique étant donné l'implantation de ce groupe moto-ventilateur en arrière de l'ensemble des échangeurs de chaleur du bloc façade de refroidissement du véhicule automobile..

En conséquence, un des buts de l'invention est de proposer un groupe moto-ventilateur pour véhicule automobile qui évite l'inconvénient précédemment mentionné et qui permet d'obtenir un refroidissement efficace du boîtier électronique.

L'invention a donc pour objet un groupe moto-ventilateur pour véhicule automobile, du type comprenant, d'une part, une hélice munie de pales sensiblement radiales et reliées entre elles par un moyeu central entraîné en rotation par un moteur électrique et, d'autre part, un support d'hélice formé par un cadre placé sur la face arrière d'au moins un radiateur de refroidissement et comportant un orifice de positionnement de cette hélice, ladite hélice aspirant l'air à travers ce radiateur de refroidissement, caractérisé en ce que l'hélice comporte au moins une portion périphérique débordant latéralement par rapport au radiateur de refroidissement et déterminant au moins une zone de captation d'air frais en dehors dudit radiateur et raccordée par des moyens de canalisation de cet air frais à au moins un organe du véhicule à refroidir.

Selon d'autres caractéristiques de l'invention :
- les moyens de canalisation de l'air frais sont isolés de l'air traversant ledit au moins radiateur de refroidissement,
- les moyens de canalisation sont formés par un espace annulaire dans lequel débouche ladite au moins zone de captation et délimité par une couronne périphérique en forme de "L" reliant les extrémités libres des pales de l'hélice et par un carénage concentrique à l'orifice du cadre dans lequel est placée ladite hélice,
- la couronne périphérique de l'hélice comprend une première branche perpendiculaire au plan des pales de cette hélice et de diamètre supérieur au diamètre de l'orifice du cadre et une seconde branche parallèle au plan desdites pales et dont le bord externe a un diamètre compris entre le diamètre de la première branche et le diamètre du carénage,
- la couronne périphérique comporte des ailettes s'étendant dans l'espace annulaire,
- les moyens de canalisation comprennent également au moins un tuyau reliant ledit espace annulaire audit boîtier,
- la zone de captation est équipée d'une écope dirigée vers l'avant du véhicule automobile, et
- l'organe du véhicule à refroidir est un boîtier électronique.

L'invention sera mieux comprise à la lecture de la description qui va suivre, donnée à titre d'exemple, et faite en référence aux dessins annexés, sur lesquels :
- la Fig. 1 est une vue schématique éclatée en perspective d'un bloc façade de refroidissement comportant un groupe moto-ventilateur conforme à l'invention,
- la Fig. 2 est une vue schématique en élévation de l'arrière du bloc façade de refroidissement de la Fig. 1,
- la Fig. 3 est une vue en perspective d'une hélice du groupe moto-ventilateur conforme à l'invention,
- la Fig. 4 est une vue en perspective du cadre du groupe moto-ventilateur conforme à l'invention,
- la Fig. 5 est une vue en perspective du cadre et de l'hélice assemblés,
- la Fig. 6 est une vue partielle en coupe selon la ligne 6-6 de la Fig. 5, et
- la Fig. 7 est une vue schématique en coupe transversale du bloc façade de refroidissement muni du groupe moto-ventilateur conforme à l'invention.

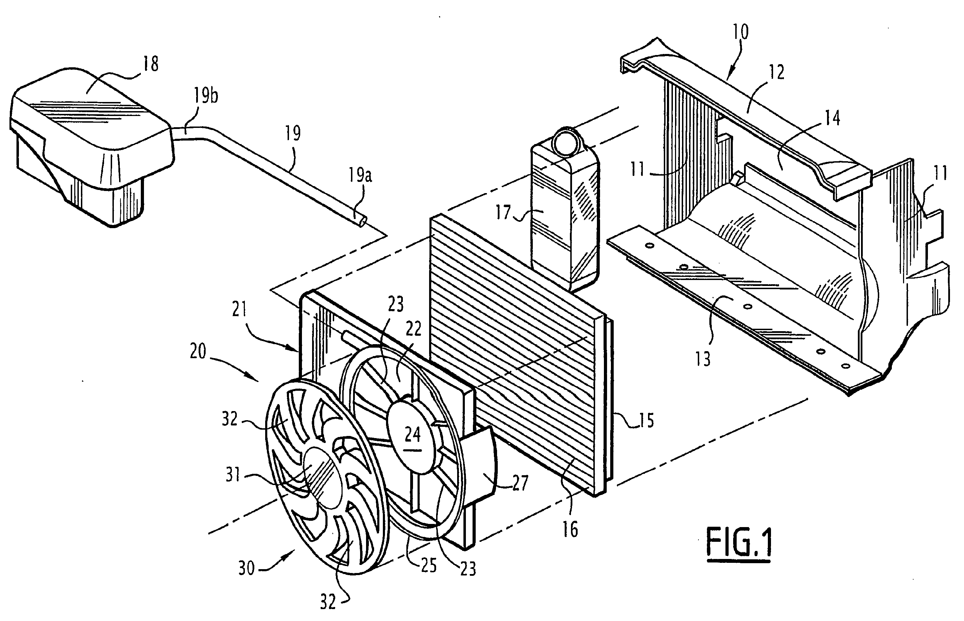

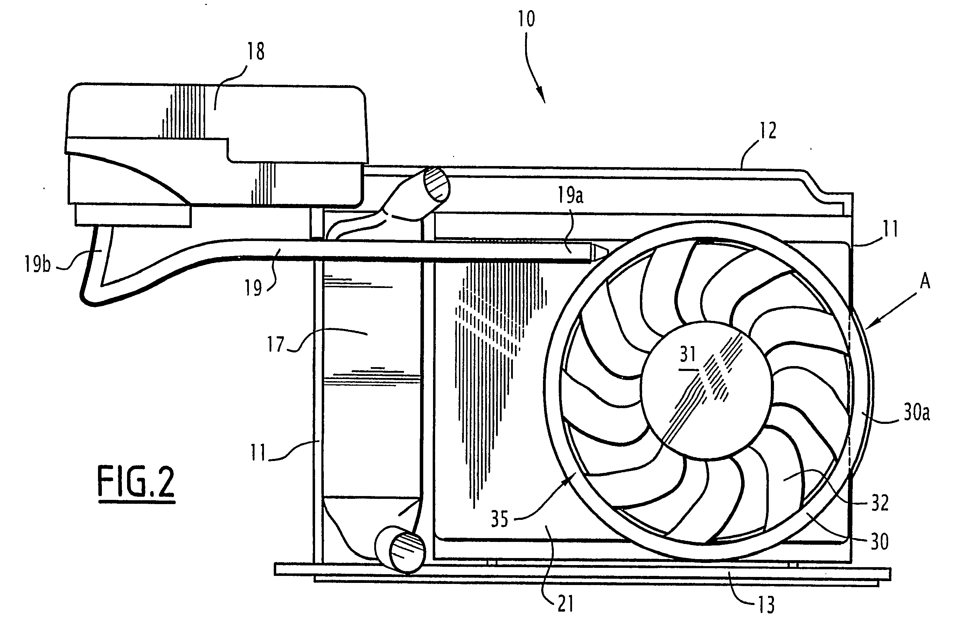

Sur les Figs. 1 et 2, on a représenté schématiquement un bloc façade de refroidissement d'un véhicule automobile qui comporte, de manière classique, un support 10 comprenant deux cloisons latérales 11, respectivement gauche et droite, une traverse supérieure 12 et une traverse inférieure 13.

Les cloisons latérales 11 et les traverses 12 et 13 déterminent un logement 14 pour un module d'échange de chaleur.

Dans l'exemple de réalisation représenté sur les Figs. 1 et 2, le module d'échange de chaleur comprend, tout d'abord, un condenseur 15 faisant partie d'un circuit de climatisation du véhicule automobile, un radiateur 16 de refroidissement du moteur de ce véhicule, un échangeur air-air 17 et un groupe moto-ventilateur désigné dans son ensemble par la référence 20 et permettant de forcer la circulation de l'air à traverser le condenseur 15 et le radiateur 16.

De plus, les véhicules automobiles sont équipés d'au moins un boîtier électronique 18 également placé au-dessous du capot moteur du véhicule, dans lequel sont concentrés divers calculateurs et moyens de pilotage électronique du véhicule.

Afin d'assurer un bon fonctionnement des différents éléments composant ce boîtier 18, une partie de l'air aspiré par le groupe moto-ventilateur 20 est dirigée vers ledit boîtier 18, comme on le verra ultérieurement.

Ce groupe moto-ventilateur 20 se compose de deux éléments, un cadre support 21 et une hélice 30.

Comme montré sur les Figs. 1, 2 et 4, le cadre 21, de forme rectangulaire, comprend deux grands côtés et deux petits côtés déterminant un périmètre correspondant sensiblement au périmètre du radiateur 16. Ce cadre 21 comporte un orifice 22 de positionnement de l'hélice 30. A cet effet, le cadre 21 comprend dans l'axe de l'orifice 22, une partie centrale 24 reliée au bord de cet orifice 22 par des entretoises de rigidification 23 s'étendant radialement. La partie centrale 24 est destinée à supporter libre en rotation l'hélice 30 qui comporte, pour cela, un moyeu 31. L'hélice 30 comporte également des pales 32 s'étendant radialement par rapport audit moyeu 31. Cette hélice 30 montée libre en rotation sur la partie centrale 24 de l'orifice 22 du cadre 21, est entraînée en rotation au moyen d'un moteur électrique, non représenté, de type classique.

Comme montré sur la Fig. 2, l'hélice 30 comporte au moins une portion périphérique 30a débordant latéralement par rapport au cadre 21 et par conséquent par rapport au radiateur de refroidissement 16.

Dans l'exemple de réalisation représenté sur cette figure, l'hélice 30 déborde sur un petit côté du cadre 21. Selon différentes variantes, cette hélice 30 peut déborder sur deux ou trois côtés latéraux, supérieur et/ou inférieur de ce cadre 21.

Le débordement latéral de l'hélice 30 par rapport à au moins un côté du radiateur 16 détermine, ainsi que montré à la Fig. 2, une zone de captation A d'air frais en dehors de ce radiateur 16 et qui est raccordée par des moyens de canalisation de cet air frais vers le boîtier électronique 18 à refroidir. Ces moyens de canalisation sont isolés de l'air traversant le condenseur 15 et le radiateur 16 de façon à ne pas diriger vers le boîtier 18 de l'air chaud à éviter ainsi de perturber son fonctionnement.

Pour cela, les moyens de canalisation de l'air frais vers le boîtier 18 sont formés par un espace annulaire 35 (Fig. 2) ménagé à la périphérie de l'orifice 22 et de l'hélice 30 dans lequel débouche la zone de captation A.

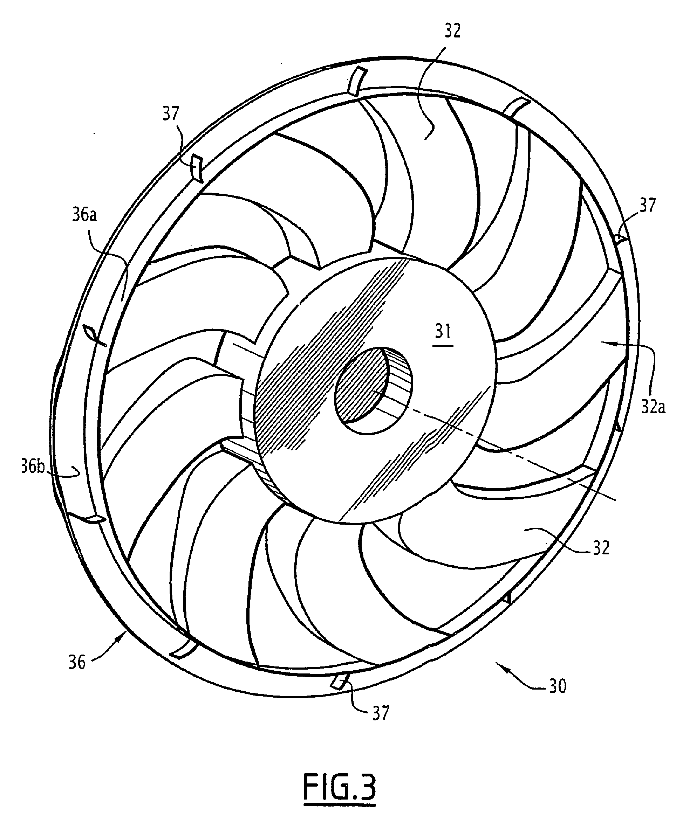

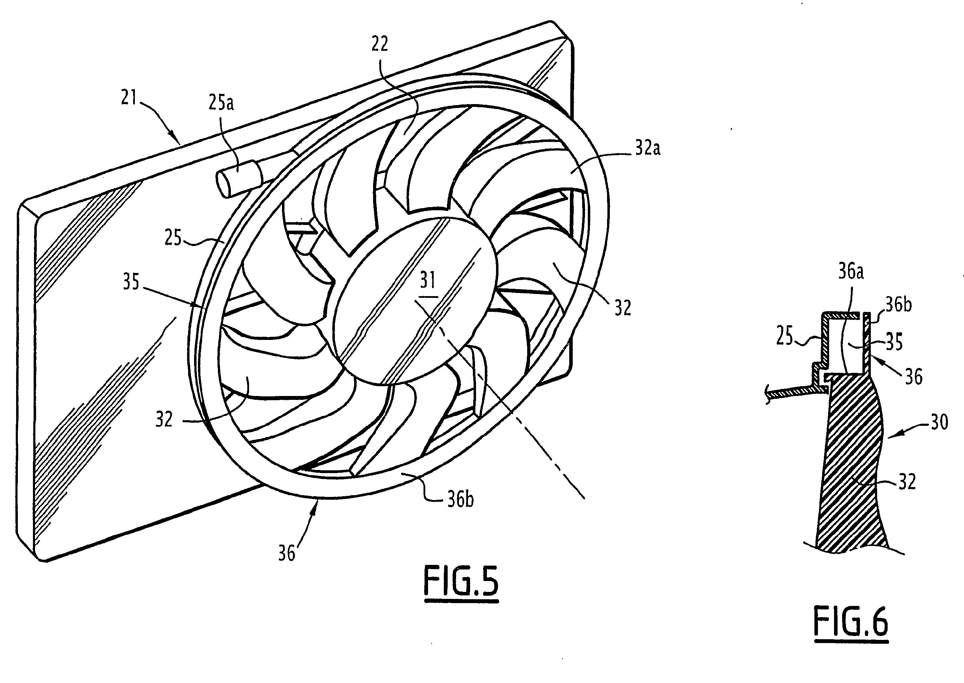

En se reportant maintenant aux Figs. 3 à 6, on va décrire l'espace annulaire 35. Cet espace annulaire est délimité d'un côté par une couronne périphérique 36 dont la section a la forme d'un "L", reliant les extrémités libres 32a des pales 32 de l'hélice 30. La couronne périphérique 36 comprend, ainsi que montré plus particulièrement aux Figs. 3 à 6, une première branche 36a s'étendant perpendiculairement au plan déterminé par les pales 32, c'est à dire parallèlement à l'axe de l'hélice 30, et une seconde branche 36b située dans un plan parallèle au plan des pales 32, c'est à dire perpendiculaire à l'axe de l'hélice 30. La première branche 36a de la couronne 36 a un diamètre supérieur au diamètre de l'orifice 22 du cadre 21 de façon à isoler la partie de la couronne 36 située entre les branches 36a et 36b de cet orifice 22.

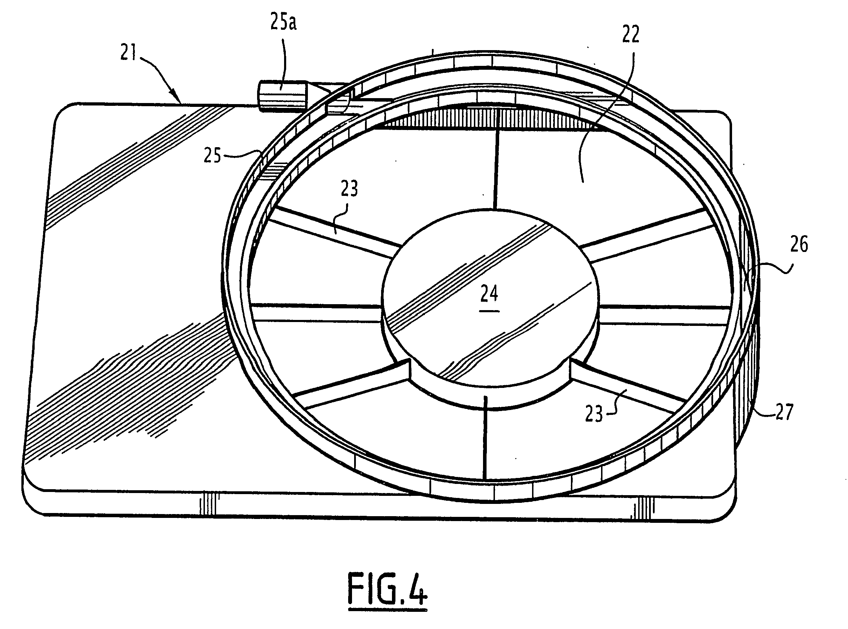

L'espace annulaire 35 est également délimité par un carénage 25, ainsi que représenté aux Figs. 4 à 6, concentrique à l'orifice 22 de ce cadre 21. Le carénage 25 détermine un logement circulaire dans lequel est placé la couronne périphérique 36 de l'hélice 30. Le bord externe de la seconde branche 36b de la couronne 36 a un diamètre compris entre le diamètre de la première branche 36a de ladite couronne 36 et le diamètre du carénage 25.

Ainsi, les branches, respectivement 36a et 36b, de la couronne 36 et le carénage 25 du cadre 21 délimitant l'espace annulaire 35 de l'air chaud aspiré par l'hélice 30 au travers du condenseur 15, du radiateur 16 et de l'orifice 22 de ce cadre 21.

Les moyens de canalisation de l'air frais comportent également un tuyau 19 dont une extrémité 19a débouche dans l'espace annulaire 35 et dont une autre extrémité 19b débouche dans le boîtier 18 à refroidir. Plus précisément, le tuyau 19 se raccorde à un embout 25a relié au carénage 25.

Ainsi que montré à la Fig. 4, le carénage 25 du cadre 21 déborde par rapport à un côté latéral de ce cadre 21 dans la zone de captation A de façon à ménager sur ce bord latéral une ouverture 26 qui est située à l'extérieur du condenseur 15 et du radiateur 16. Cette ouverture 26 est équipée d'une écope 27 dirigée vers l'avant du véhicule automobile et dont l'extrémité libre est située devant le condenseur 15.

Enfin, la couronne périphérique 36 de l'hélice 30 est équipée d'ailettes 37 uniformément réparties sur ladite couronne 36 et qui permettent d'accélérer le flux d'air dirigé vers le boîtier 18 au cours de la rotation de l'hélice 30.

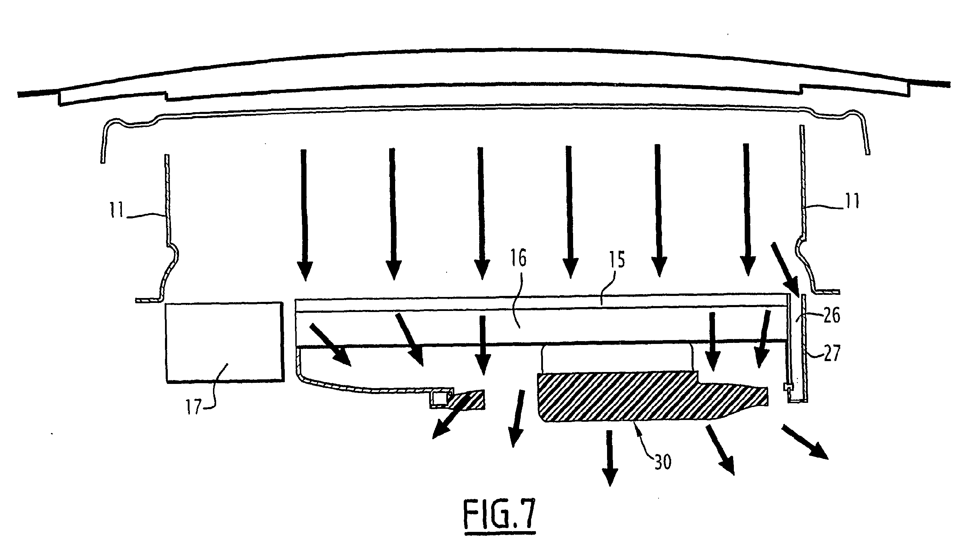

Ainsi que montré à la Fig. 7, lors de la rotation de cette hélice 30 dans le cadre 21, la partie de ladite hélice 30 située en face de l'ouverture 22 de ce cadre 21, c'est à dire en face du condenseur 15 et du radiateur 16, sert à aspirer l'air pour refroidir ce condenseur 15 et ce radiateur 16.

La portion 30a de l'hélice 30 située dans la zone de captation A en face de l'ouverture 26 sert à capter l'air frais par cette ouverture 26 et qui n'a pas traversé le condenseur 15 et le radiateur 16 pour diriger cet air frais dans l'espace annulaire 35 et le canaliser vers la boîte 18 par l'intermédiaire du tuyau 19 afin de refroidir directement cette boîte 18.

Selon une variante, l'hélice 30 peut comporter une ou plusieurs portions débordant du cadre 21 et de l'ensemble formé par le condenseur 15 et le radiateur 16 sur deux, trois ou même quatre côtés de ce cadre 21. En face de chacune de ces portions, le carénage 25 du cadre 21 détermine, avec chaque côté de ce cadre 21, une ouverture 26. Chaque ouverture 26 peut également être équipée d'une écope 27.

Selon une autre variante, l'espace annulaire 35 peut communiquer avec plusieurs tuyaux de refroidissement distincts pour le refroidissement de différents organes du véhicule automobile. Il peut aussi être utile d'augmenter le flux d'air frais dans un seul tuyau de refroidissement en fusionnant l'air frais arrivant par plusieurs ouvertures 26 et écopes 27.

Le groupe moto-ventilateur selon l'invention permet donc, par des moyens simples, de refroidir de manière efficace un ou plusieurs organes d'un véhicule automobile, tel que par exemple au moins un boîtier élecronique ou au moins un disque de frein (exemples non limitatifs) avec un groupe moto-ventilateur disposé en arrière d'un ensemble de refroidissement.

## Revendications

1. Groupe moto-ventilateur pour véhicules automobiles, du type comprenant, d'une part, une hélice (30) munie de pales (32) sensiblement radiales et reliées entres elles par un moyeu central (31) entraîné en rotation par un moteur électrique et, d'autre part, un support d'hélice formé par un cadre (21) placé sur la face arrière d'au moins un radiateur (16) de refroidissement et comportant un orifice (22) de positionnement de cette hélice (30), ladite hélice (30) aspirant l'air à travers ce radiateur (16) de refroidissement, **caractérisé en ce que** l'hélice (30) comporte au moins une portion périphérique (30a) débordant latéralement par rapport au radiateur (16) de refroidissement et déterminant au moins une zone de captation d'air frais en dehors dudit radiateur (16) et raccordée par des moyens (19, 35) de canalisation de cet air frais vers au moins un organe du véhicule (18) à refroidir.

2. Groupe moto-ventilateur selon la revendication 1, **caractérisé en ce que** les moyens (19, 35) de canalisation de l'air frais sont isolés de l'air traversant le radiateur (16) de refroidissement.

3. Groupe moto-ventilateur selon la revendication 1 ou 2 **caractérisé en ce que** les moyens de canalisation sont formés par un espace annulaire (35) dans lequel débouche ladite au moins zone de captation et délimité par une couronne périphérique (36) en forme de "L" reliant les extrémités libres (32a) des pales (32) de l'hélice (30) et par un carénage (25) concentrique à l'orifice (22) du cadre (21) et dans lequel est placé ladite hélice (30).

4. Groupe moto-ventilateur selon la revendication 3, **caractérisé en ce que** la couronne périphérique (36) de l'hélice (30) comprend une première branche (36a) perpendiculaire au plan des pales (32) de cette hélice (30) et de diamètre supérieur au diamètre de l'orifice (22) du cadre (21) et une seconde branche (36b) parallèle au plan desdites pales (32) et dont le bord externe a un diamètre compris entre le diamètre de la première branche (36a) et le diamètre du carénage (25).

5. Groupe moto-ventilateur selon la revendication 3 ou 4, **caractérisé en ce que** la couronne périphérique (36) comporte des ailettes (37) s'étendant dans l'espace annulaire (35).

6. Groupe moto-ventilateur selon l'une quelconque des revendications 1 à 5, **caractérisé en ce que** les moyens de canalisation comprennent au moins un tuyau (19) reliant ledit espace annulaire (35) audit organe du véhicule (18) à refroidir.

7. Groupe moto-ventilateur selon l'une quelconque des revendications 1 à 6, **caractérisé en ce que** la zone de captation est équipée d'une écope (27) dirigée vers l'avant du véhicule automobile.

8. Groupe moto-ventilateur selon l'une quelconque des revendications 1 à 7, **caractérisé en ce que** l'organe du véhicule à refroidir est un boîtier électronique (18).

## Claims

1. A motor-driven fan for automotive vehicles of the type comprising an impeller (30) provided with substantially radial blades (32) that are connected with each other by a central hub (31) rotated by an electric motor and an impeller support formed by a frame (21) placed on the rear face of at least one cooling radiator (16) and including an opening (22) for positioning said impeller (30), said impeller (30) drawing the air across said cooling radiator (16), **characterised in that** said impeller (30) includes at least one peripheral portion (30a) projecting laterally relative to the cooling radiator (16) and defining at least one fresh air catchment zone outside of said radiator (16) and connected by means (19, 35) for channelling said fresh air to at least one element of the vehicle (18) that is to be cooled.

2. Motor-driven fan according to claim 1, **characterised in that** the means (19, 35) for channelling the fresh air are isolated from the air traversing the cooling radiator (16).

3. Motor-driven fan according to claim 1 or 2, **characterised in that** the channelling means are formed by an annular space (35) into which said at least one catchment zone projects and is defined by a L-shaped peripheral crown (36) connecting the free ends of the blades (32) of the impeller (30) and by a fairing (25) concentric with the opening (22) of the frame (21) and in which said impeller is arranged (30).

4. Motor-driven fan according to claim 1 or 2, **characterised in that** the peripheral crown (36) of the impeller (30) comprises a first branch (36a) arranged perpendicular to the plane of the blades (32) of said impeller (30) and having a diameter greater than the diameter of the opening (22) of the frame (21) and a second branch (36b) arranged parallel to the plane of said blades (32) and whose outside edge has a diameter between the diameter of the first branch (36a) and the diameter of the fairing (25).

5. Motor-driven fan according to claim 3 or 4, **characterised in that** the peripheral crown (36) includes tabs extending into the annular space (35).

6. Motor-driven fan according any one of claims 1 or 5, **characterised in that** the channelling means comprise at least one tube (19) connecting said annular space (35) to said element of the vehicle (18) that is to be cooled.

7. Motor-driven fan according to one of claims 1 to 6, **characterised in that** the catchment zone is equipped with a scoop (27) directed towards the front of the automotive vehicle.

8. Motor-driven fan according to one of claims 1 to 7, **characterised in that** the element of the vehicle that is to be cooled is an electronic controller (18).

## Patentansprüche

1. Lüftersatz für Kraftfahrzeuge, umfassend einerseits einen Propeller (30) mit im Wesentlichen radialen Flügeln (32), die durch eine zentrale Nabe (31) miteinander verbunden sind, die durch einen Elektromotor in Drehung versetzt wird, und andererseits einen Propellerhalter, der von einem Rahmen (21) gebildet ist, der auf der Rückseite mindestens eines Kühlers (16) angeordnet ist und eine Öffnung (22) zur Positionierung des Propellers (30) umfasst, wobei der Propeller (30) die Luft durch den Kühler (16) ansaugt, **dadurch gekennzeichnet, dass** der Propeller (30) mindestens einen Umfangsteil (30a) umfasst, der seitlich bezüglich des Kühlers (16) vorsteht und mindestens eine Zone zum Erfassen von Frischluft außerhalb des Kühlers (16) bildet, die durch Mittel (19, 35) zur Leitung dieser Frischluft mit mindestens einem zu kühlenden Organ (18) verbunden ist.

2. Lüftersatz nach Anspruch 1, **dadurch gekennzeichnet, dass** die Mittel (19, 35) zur Leitung der Frischluft von der den Kühler (16) durchquerenden Luft getrennt sind.

3. Lüftersatz nach Anspruch 1 oder 2, **dadurch gekennzeichnet, dass** die Leitungsmittel von einem ringförmigen Raum (35) gebildet sind, in dem die mindestens eine Erfassungszone ausmündet und der von einem "L"-förmigen Umfangskranz (36), der die freien Enden (32a) der Flügel (32) des Propellers (30) verbindet, und durch eine zur Öffnung (22) des Rahmens (21) konzentrische Verkleidung (25) begrenzt ist, in der der Propeller (30) angeordnet ist.

4. Lüftersatz nach Anspruch 3, **dadurch gekennzeichnet, dass** der Umfangskranz (36) des Propellers (30) einen ersten Schenkel (36a), der zu der Ebene der Flügel (32) des Propellers (30) senkrecht ist und dessen Durchmesser größer als der Durchmesser der Öffnung (22) des Rahmens (21) ist, und einen zweiten Schenkel (36b) umfasst, der zur Ebene der Flügel (32) parallel ist und dessen Außenrand einen Durchmesser besitzt, der zwischen dem Durchmesser des ersten Schenkels (36a) und dem Durchmesser der Verkleidung (25) liegt.

5. Lüftersatz nach Anspruch 3 oder 4, **dadurch gekennzeichnet, dass** der Umfangskranz (36) Blätter (37) umfasst, die sich in dem ringförmigen Raum (35) erstrecken.

6. Lüftersatz nach einem der Ansprüche 1 bis 5, **dadurch gekennzeichnet, dass** die Leitungsmittel mindestens ein Rohr (19) umfassen, das den ringförmigen Raum (35) mit dem zu kühlenden Organ (18) des Fahrzeugs verbindet.

7. Lüftersatz nach einem der Ansprüche 1 bis 6, **dadurch gekennzeichnet, dass** die Aufnahmezone mit einem Fänger (27) versehen ist, der bezüglich des Kraftfahrzeugs nach vorne gerichtet ist.

8. Lüftersatz nach einem der Ansprüche 1 bis 7, **dadurch gekennzeichnet, dass** das zu kühlende Organ des Fahrzeugs ein elektronisches Gerät (18) ist.
